**Europäisches Patentamt**

**European Patent Office**

**Office européen des brevets**

(11) Veröffentlichungsnummer: **0 044 382**
**B1**

(12) **EUROPÄISCHE PATENTSCHRIFT**

(45) Veröffentlichungstag der Patentschrift:
**09.11.83**

(21) Anmeldenummer: **81103649.0**

(22) Anmeldetag: **12.05.81**

(51) Int. Cl.³: **C 02 F 7/00**, B 01 F 5/04,
C 02 F 3/12

(54) Schwimmende Wasserreinigungseinrichtung.

(30) Priorität: **12.07.80 DE 3026519**

(43) Veröffentlichungstag der Anmeldung:
**27.01.82 Patentblatt 82/4**

(45) Bekanntmachung des Hinweises auf die Patenterteilung:
**09.11.83 Patentblatt 83/45**

(84) Benannte Vertragsstaaten:
**AT BE CH FR GB IT LI LU NL SE**

(56) Entgegenhaltungen:
**DE - A - 2 447 337**
**DE - A - 2 523 591**
**DE - A - 2 730 853**
**DE - A - 2 806 187**
**FR - A - 1 377 571**

(73) Patentinhaber: **WSW Planungs-GMBH, Riphaushof,
D-4355 Waltrop (DE)**

(72) Erfinder: **Stog, Wilhelm, Ing. grad., In der Baut 9,
D-4355 Waltrop (DE)**

(74) Vertreter: **Schulte, Jörg , Dipl.-Ing., Hauptstrasse 73,
D-4300 Essen-Kettwig (DE)**

## Schwimmende Wasserreinigungseinrichtung

Die Erfindung betrifft eine Einrichtung zur Reinigung von Brauchwässern, insbesondere zur Regenerierung von verschlammten Gewässern mit Hilfe einer Wasserstrahlpumpe, die über ein Luftansaugrohr angesaugte Luft mit dem Wasser in eine doppelwandige, mit Steigung zur Wasseroberfläche in (Strömungsrichtung gesehen) angeordnete beidseitig offene Leitung ausstößt, wobei die innere Wandung der Leitung luftdurchlässig und deren äußere Wandung luftundurchlässig ausgebildet ist.

Derartige Einrichtungen dienen zur biologischen Reinigung von Schmutzwässern und zur Regenerierung von Gewässern, die aufgrund fehlenden Sauerstoffs weitgehend verschlammt sind. Es sind Vorrichtungen bekannt (FR-A-1 377 571), bei denen das über eine Wasserstrahlpumpe erzeugte Wasser-Luft-Gemisch eine Zeitlang in einem Mischrohr gehalten wird, um so durch die zwangsweise Führung des Austrittstrahles die Verweilzeit der Luftblasen im Wasser zu erhöhen. Zur Verlängerung der Verweilzeit der Luftbläschen ist weiter vorgeschlagen worden (DE-A-2 523 591), das Mischrohr wesentlich zu verlängern und dieses dabei als doppelwandige Leitung mit einer luftundurchlässigen äußeren und einer luftdurchlässigen inneren Wandung auszubilden. Dabei ist die doppelwandige Leitung mit einer geringen Steigung zur Wasseroberfläche hin angeordnet. Mit einer derartigen Einrichtung wird in vorteilhafter Weise erreicht, daß die Luftbläschen zunächst durch die luftdurchlässige Wandung hindurchdringen müssen, bevor sie sich unterhalb der luftundurchlässigen Wandung sammeln, zu größeren Luftblasen zusammenballen und dann zur Wasseroberfläche hin aufsteigen.

Nachteilig bei den bekannten Einrichtungen zur Reinigung von Brauchwässern ist, daß die einzelnen Luftbläschen in der Regel sehr schnell nach Verlassen der Wasserstrahlpumpe zur luftdurchlässigen Schicht gelangen und nach Durchdringung der luftdurchlässigen Wandung sehr schnell zur Wasseroberfläche hin aufsteigen. Nachteilig ist weiter in verschlammten Gewässern, daß die gesamte Einrichtung auf dem Grund des Gewässers aufsteht und dabei sowohl durch den Ansaugstutzen der Wasserstrahlpumpe Schlamm mit aufgewirbelt und angesaugt wird und dann zu einer frühzeitigen Verschmutzung der doppelwandigen Leitung führt. Insbesondere setzen sich die kleinen Öffnungen in der luftdurchlässigen Wandung zu, so daß sich die Luftbläschen sehr schnell zusammenballen und dann an der an sich luftdurchlässigen Wandung entlang als große Luftblasen zur Wasseroberfläche hin aufsteigen. Dennoch ist diese Art der Wasserreinigung umweltfreundlicher als die direkte Einblasung von Preßluft in verschlammte Gewässer, weil auf Kompressoren und ähnliche am Ufer angeordnete Einrichtungen verzichtet werden kann.

Der Erfindung liegt die Aufgabe zugrunde, eine von Unebenheiten des Gewässerbodens unabhängige, immer in einer definierten Höhe unterhalb des Wasserspiegels, umweltfreundlich zu betreibende Wasserreinigungseinrichtung zu schaffen.

Die Aufgabe wird gemäß der Erfindung dadurch gelöst, daß die Wasserstrahlpumpe und die doppelwandige Leitung einem Traggerüst aus Rohrrahmen zugeordnet sind, die Entlüftungs- und Flutventile aufweisen.

Eine derartige Einrichtung zur Reinigung von Brauchwässern kann mit Hilfe des zu flutenden Traggerüstes aus Rohrrahmen jeweils in einer solchen Höhe unterhalb der Wasseroberfläche angeordnet werden, daß dem Ansaugstutzen der Wasserstrahlpumpe Wasser zugeführt wird, ohne dabei den auf dem Gewässerboden abgesetzten Schlamm aufzuwühlen. Auch die innerhalb der Einrichtung erzeugte Wasserbewegung bleibt ohne negativen Einfluß auf die Einrichtung selbst, da eventuell auf dem Gewässerboden lagernder Schlamm erst am Austrag der Einrichtung von der Wasserströmung aufgewühlt werden kann. In vorteilhafter Weise kann die Einrichtung somit in einer optimalen Position angeordnet werden, unabhängig vom Verlauf des eigentlichen Gewässerbodens und unabhängig von dem jeweiligen Verschlammungsgrad. Darüber hinaus ist ein hoher Grad an Umweltfreundlichkeit erreicht, da der für die Wasserstrahlpumpe benötigte Antrieb innerhalb des Gewässers selbst angeordnet werden kann und somit lediglich ein Versorgungskabel und das Luftansaugrohr oberhalb des Wasserspiegels sichtbar werden.

Sowohl zur Verstrebung der das Traggerüst bildenden Rohrrahmen als auch zur gleichmäßigen Flutung der Rohrrahmen bzw. zu ihrer Belüftung ist erfindungsgemäß vorgesehen, daß die Querrohre aufweisenden Rohrrahmen miteinander durch Vertikalrohre verbunden sind. Die Rohrrahmen bilden somit eine Luftkammer, die über die Entlüftungs- und Flutventile je nach Notwendigkeit geflutet oder belüftet werden können.

Die vorgegebene Neigung der doppelwandigen Leitung kann, falls notwendig, dadurch geändert und den Gegebenheiten angepaßt werden, daß der obere und der untere Rohrrahmen in mehrere korrespondierende Abschnitte abgeschottet sind. Durch unterschiedliche Flutung oder Entleerung der einzelnen Abschnitte kann der gesamten Einrichtung eine beliebige Neigung gegeben werden, ohne daß an der Konstruktion etwas geändert werden muß. Außerdem hat dies den Vorteil, daß die gesamte Einrichtung gegebenenfalls schneller abgesenkt oder angehoben werden kann. Hierzu weisen die einzelnen Abschnitte erfindungsgemäß jeweils Entlüftungs- und Flutventile auf.

Nach einer zweckmäßigen Ausbildung der Erfindung ist vorgesehen, daß die Entlüftungsventile dem oberen und die Flutventile dem unteren Rohrrahmen zugeordnet sind. Dies hat zwar den geringen Nachteil, daß über die Flutventile Schmutz mit in die Rohrkonstruktion gelangen kann, bietet aber den Vorteil, daß die Flutung schneller abläuft. Dabei können die tief im Wasser liegenden Flutventile über Gestänge von der Wasseroberfläche aus mechanisch betätigt werden, so daß der notwendige Regelaufwand gering gehalten wird.

Um das Traggerüst insgesamt möglichst einfach im Gleichgewicht zu halten, ist es zweckmäßig, daß der obere Rohrrahmen im Bereich der Wasserstrahlpumpe mehrere, einen dem Druckmesser der Rohre des Rohrrahmens entsprechenden Durchmesser aufweisende Querrohre aufweist. Dadurch wird das auf diesen Teil des Traggerüstes wirkende Gewicht ohne Schwierigkeiten ausgeglichen.

Der weiteren möglichst günstigen Gewichtsverteilung dient die erfindungsgemäße Ausbildung, bei der die die Wasserstrahlpumpe bildenden Verdichter, Pumpe und Motor axial hintereinander angeordnet sind. Dies hat außerdem strömungstechnische und energieverbrauchsmäßige Vorteile, da das angesaugte Wasser ohne Richtungsänderung bis in den Wasserstrahlverdichter gedrückt wird.

Zur Verminderung der durch das Ansaugen der Luft auftretenden Belästigungen ist erfindungsgemäß vorgesehen, daß auf das freie Ende des Luftansaugrohres ein Schalldämpfer aufgesetzt ist. Durch diese Maßnahme wird die Geräuschbelästigung durch die erfindungsgemäße Einrichtung praktisch auf Null reduziert, da die Wasserstrahlpumpe selbst mit ihrem Antrieb im Gewässer angeordnet ist. Es ist aber auch möglich, den Motor oder aber auch den Motor und die Pumpe oberhalb des oberen Rohrrahmens und damit oberhalb des Wasserspiegels anzuordnen, wenn dies aus Wartungsgründen als notwendig und vorteilhaft angesehen wird.

Die Entlüftungs- und Flutventile der einzelnen Abschnitte sind zweckmäßig an den Verbindungsstellen der einzelnen Abschnitte angeordnet. Diese Ventile können dann einfach erreicht werden, wenn gemäß einer weiteren Ausbildung der Erfindung der obere Rohrrahmen im Bereich der Verbindungsstellen zwischen den Abschnitten Ständerfüße für einen Gitterrost aufweist. Da die Einrichtung zur Reinigung der Brauchwässer in der Regel unmittelbar unterhalb der Wasseroberfläche angeordnet ist, liegen die Gitterroste oberhalb der Wasseroberfläche und können somit leicht und trockenen Fußes erreicht werden. Da die Einrichtung aufgrund ihrer Länge und Breite über eine ausreichende Stabilität verfügt, ist es auch möglich, die Ständerfüße ausziehbar zu gestalten, so daß diese auch dann oberhalb des Wasserspiegels liegen, wenn die Einrichtung tiefer in das Gewässer eingehängt wird.

Da möglichst das am wenigsten Sauerstoff beinhaltende Wasser mit Hilfe der Einrichtung begast bzw. mit Sauerstoff angereichert werden soll, ist es zweckmäßig, das Ansaugende der Wasserstrahlpumpe über eine Schlauchleitung mit einer auf dem Boden des Gewässers angeordneten Saugstation zu verbinden. Bei einer derartigen Ausbildung wird die Saugstation immer das sauerstoffarme Wasser der Einrichtung zuführen, ohne daß die Einrichtung insgesamt abgesenkt werden muß.

Bei der Zuordnung einer Saugstation, die auf dem Boden des Gewässers angeordnet ist, wird erfindungsgemäß das Ansaugen vom Schlamm und zu stark verschmutztem Wasser dadurch verhindert, daß die Saugstation einen zur Wasseroberfläche weisenden Einlauftrichter aufweist, der in einem mit vertikal angeordneten Grob- und dahinter horizontal angeordneten Feinsieb ausgerüsteten kastenförmigen Gehäuse angeordnet ist. Das dem Einlauftrichter zugeführte Wasser ist somit weitgehend von Schmutzstoffen gereinigt, wobei durch die besondere Führung des Wassers sichergestellt ist, daß keine zu große Beunruhigung durch das angesaugte Wasser auftritt.

Der durch die Zufuhr von Sauerstoff begünstigte Reinigungseffekt wird gemäß der Erfindung dadurch erhöht, daß in dem zu reinigenden Gewässer mehrere in Traggerüsten aus Rohrrahmen angeordnete Wasserstrahlpumpen und doppelwandige Leitungen so angeordnet sind, daß diese über Ansaugung und Ausstoß des Wasser miteinander in Verbindung sind und gegebenenfalls ein Wasserkreislauf im Gewässer erzeugt und aufrechterhalten wird. Dadurch wird bei stillstehenden Gewässern eine schnellere Durchmischung mit dem gasreicheren Wasser erreicht, so daß die biologische Reinigung beschleunigt wird.

Die Verweilzeit der von der Wasserstrahlpumpe ausgestoßenen Luftbläschen innerhalb der doppelwandigen Leitung kann gemäß der Erfindung erhöht werden, indem entweder das vordere Stück des als Strömungskanal dienenden Leitungsinnenteils vertikal verschwenkbar ausgebildet ist oder, indem die Spitze des als Abdeckhaube dienenden Leitungsaußenteils in vertikaler Richtung verschwenkbar ist. Es ist auch denkbar, beide Ausbildungen miteinander zu kombinieren. Außerdem kann dabei die Richtung des die Einrichtung verlassenden Wasserstrahls beeinflußt und den Notwendigkeiten entsprechend eingestellt werden.

In der Regel ist es zweckmäßig, die Einrichtung eine längere Zeit über an einer bestimmten Stelle eines solchen zu reinigenden Gewässers zu belassen. Um dies z. B. auch bei einer bestimmten Fließgeschwindigkeit aufweisenden Gewässern zu gewährleisten, weist der obere Rohrrahmen endseitig jeweils Verankerungsösen auf, über die die Einrichtung am Land oder aber über Anker oder Gewichte auf dem Gewässerboden durch Seile oder ähnliches verankert werden kann.

Die Erfindung zeichnet sich insbesondere dadurch aus, daß die vorteilhafte Wirkungsweise einer Wasserstrahlpumpe mit zugeordneter doppelwandiger Leitung auch bei Einsatz in weitgehend verunreinigten und verschlammten Gewässern für lange Einsatzzeiten gewährleistet werden kann, wobei die notwendigen Antriebsaggregate und die sonstigen Geräusche verursachenden Teile unweltfreundlich angeordnet bzw. ausgebildet sind. Darüber hinaus ist die Einrichtung wartungsfreundlich und kann ohne Schwierigkeiten auch sich ändernden Gegebenheiten angepaßt werden.

Weitere Einzelheiten und Vorteile des Erfindungsgegenstandes ergeben sich aus der nachfolgenden Beschreibung der Zeichnung, in der ein bevorzugtes Ausführungsbeispiel mit den dazu notwendigen Einzelheiten und Einzelteilen dargestellt ist. In der Zeichnung zeigt

Fig. 1 einen Längsschnitt,

Fig. 2 eine Teilansicht mit dem Antriebsaggregat,

Fig. 3 eine Kopfansicht im Bereich des Antriebsaggregates,

Fig. 4 einen Querschnitt,

Fig. 5 eine Draufsicht eines Teilausschnittes gemäß Fig. 1,

Fig. 6 die Saugstation im Längsschnitt und

Fig. 7 die Saugstation in Draufsicht.

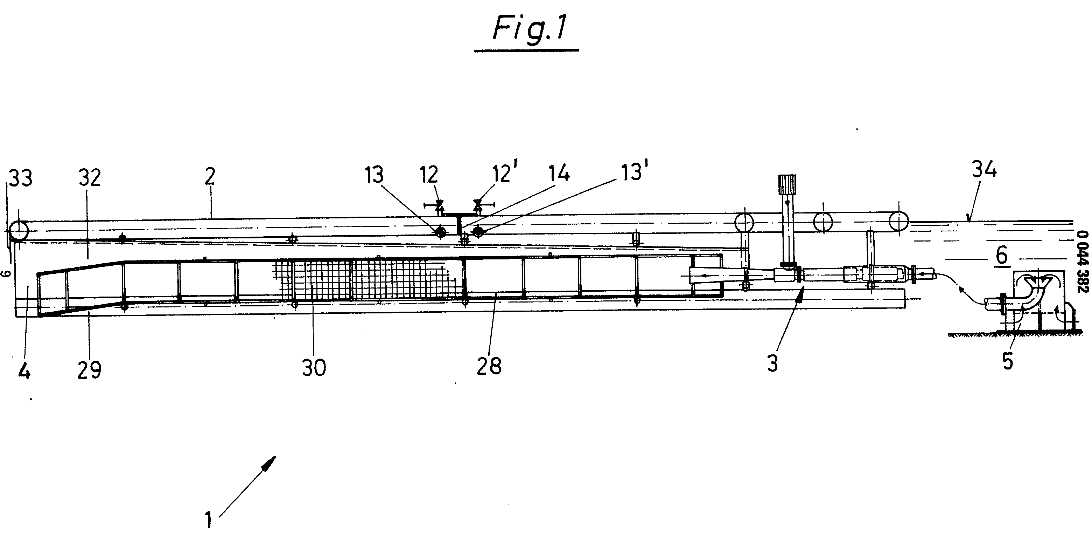

Die schwimmende Wasserreinigungseinrichtung ist in Fig. 1 allgemein mit dem Bezugszeichen 1 bezeichnet. Die Wasserreinigungseinrichtung 1 besteht aus dem Traggerüst 2, das die Wasserstrahlpumpe 3 und die doppelwandige Leitung 4 trägt, und das mit der Saugstation 5, die auf dem Boden des Gewässers 6 steht, verbunden ist.

Das Traggerüst 2 weist einen oberen Rohrrahmen 7 und einen unteren Rohrrahmen 8 auf, wobei beide aus gleiche Durchmesser aufweisenden Hohlrohren gebildet sind. Die den oberen Rohrrahmen 7 bzw. den unteren Rohrrahmen 8 bildenden Rohre sind dabei über die Querrohre 9 miteinander verbunden. Die Rohrrahmen 7, 8 ihrerseits sind zur Bildung einer durchgehenden Luftkammer über Vertikalrohre 10 miteinander verbunden.

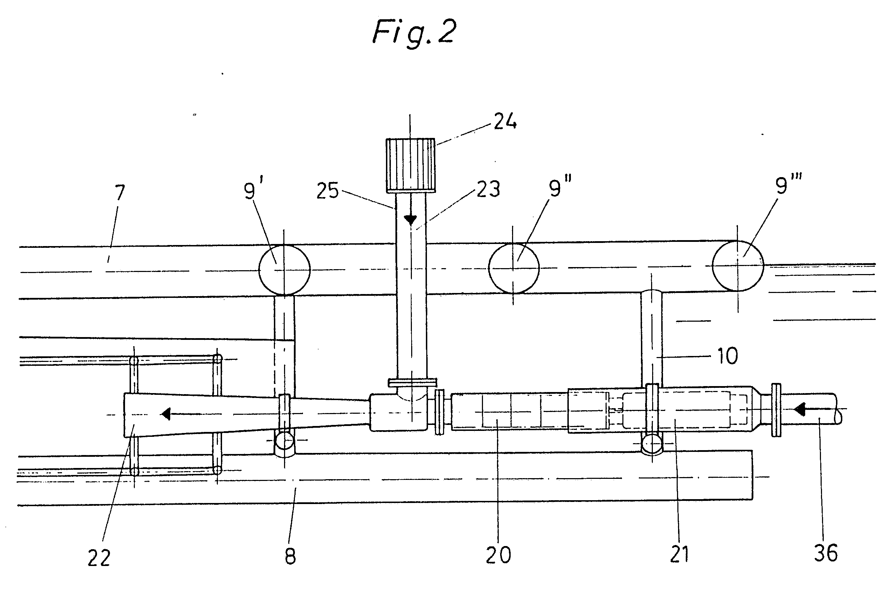

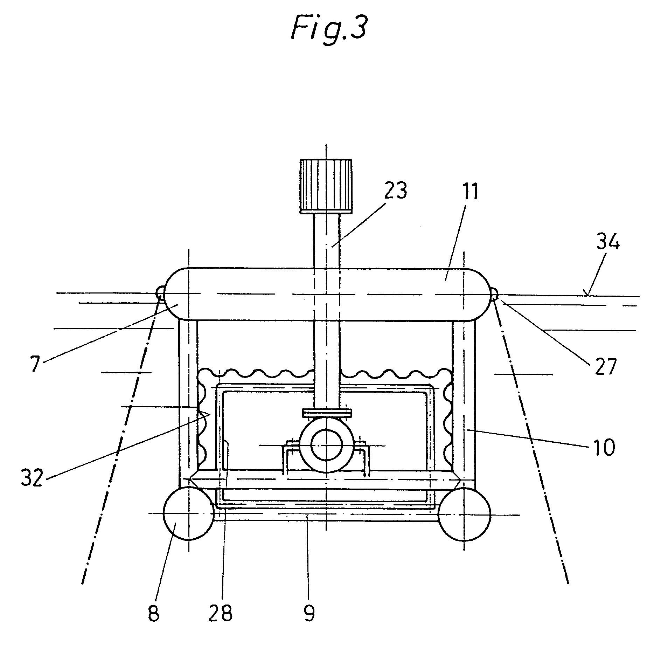

Während der untere Rohrrahmen 8, wie u. a. aus Fig. 2 und Fig. 3 hervorgeht, aus zwei parallel zueinander verlaufenden Rohren, die über die Querrohre 9 verbunden sind, besteht, sind die beiden parallel laufenden Rohre des oberen Rohrrahmens 7 über Querverbinder 11 miteinander verbunden, so daß die gesamte Wasserreinigungseinrichtung 1 im Gleichgewicht ist. Etwa mittig der Rohrrahmen 7, 8 sind diese gegeneinander durch eine Verbindungsstelle 14 abgeschottet, so daß Abschnitte 15, 16 entstehen. Diese Abschnitte 15, 16 weisen jeweils Entlüftungsventile 12, 12' bzw. Flutventile 13, 13' auf, so daß beide Abschnitte 15, 16 entweder gleichzeitig oder aber zu unterschiedlichen Zeiten geflutet oder entleert werden können.

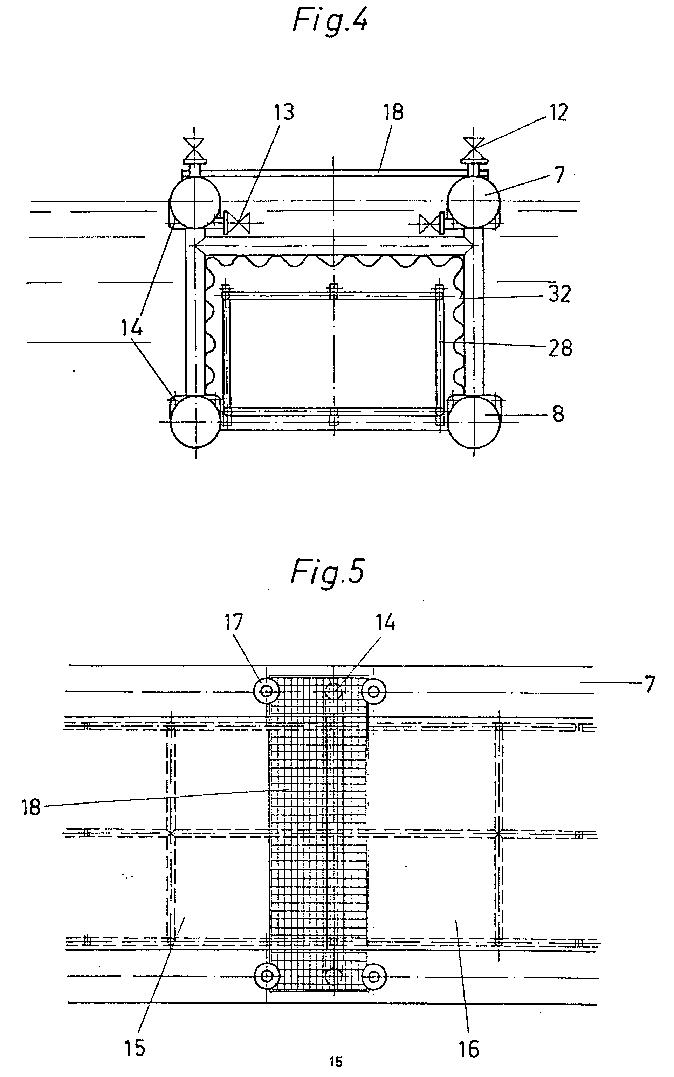

Auf dem oberen Rohrrahmen 7 sind Ständerfüße 17 z. B. angeschweißt, um als Auflage für einen Gitterrost 18 zu dienen. Über den Gitterrost 18 kann, wie Fig. 1 und Fig. 5 zeigt, der Bereich der Verbindungsstelle 14 und der Ventile 12, 12', 13, 13' gut erreicht werden, falls die Ventile bedient werden müssen oder aber bei Wartungsarbeiten.

Die Wasserstrahlpumpe 3 besteht, wie Fig. 2 zeigt, aus der eigentlichen Pumpe 20, dem vorzugsweise elektrisch angetriebenen Motor 21 und dem Verdichter 22. Zwischen Verdichter 22 und der Pumpe 20 mündet das Luftansaugrohr 23 ein, über das der benötigte Sauerstoff bzw. die Luft angesaugt und in den Wasserstrahl hineingezogen wird. Auf das freie Ende 25 des Luftansaugrohres 23 ist ein Schalldämpfer 24 aufgesetzt, um die durch das Ansaugen der Luft entstehenden Geräusche weitgehend abzumildern. Die Pumpe 20, der Motor 21 und der Verdichter 22 sind hintereinander angeordnet, so daß sich eine günstige Gewichtsverteilung ergibt. Um die Gewichtsverteilung bzw. einen Ausgleich herbeizuführen, ist im Bereich der Wasserstrahlpumpe 3 die Anordnung mehrerer Querrohre 9, 9'' und 9''' vorgesehen.

Die schwimmende Wasserreinigungseinrichtung 1 kann an einer vorgegebenen Position einfach verankert werden, indem am Ufer angeschlagene oder Gewichte aufweisende Seile an den Verankerungsösen 27, die in Fig. 3 gezeigt sind, befestigt werden.

Die doppelwandige Leitung 4 besteht aus dem Leitungsinnenteil 28 und dem Leitungsaußenteil 32. Das Leitungsinnenteil 28 ist mit einer Kunststoffbespannung 30 versehen, so daß die vom Verdichter 22 ausgestoßenen Luftbläschen mit gewisser Verzögerung des Leitungsinnenteils 28 durchdringen und sich an dem wellenförmig ausgebildeten Leitungsaußenteil 32 sammeln können. Durch die wellenförmige Ausbildung des Leitungsaußenteils 32 wird die Bildung von großen und schnell zur Wasseroberfläche 34 aufsteigenden Luftblasen verhindert. Ein Vergleich der Fig. 3 und 4 zeigt, daß der vom Leitungsaußenteil 32 gebildete Querschnitt in Richtung auf dessen Spitze 33 zunimmt, d. h. das Leitungsaußenteil 32 weist eine zur Wasseroberfläche 34 weisende Steigung auf. Die Spitze 33 des Leitungsaußenteils 32 ist schwenkbar ausgebildet, um die hier ankommenden Luftblasen eventuell noch einmal aufzuhalten und ins Wasser hinein abzudrängen.

Das vordere Stück 29 des Leitungsinnenteils 28 ist ebenfalls schwenkbar ausgebildet, um dem Wasserstrom eine bestimmte Richtung zu geben. Wie aus Fig. 1 hervorgeht, ist das vordere Stück 29 in Richtung Gewässerboden gerichtet, so daß der mit Sauerstoff angereicherte Wasserstrom gezwungen wird, über den Gewässerboden hinweg zu strömen und dabei die noch nicht mit Sauerstoff angereicherten Wasserschichten zu verdrängen bzw. sich mit diesen zu durchmischen. Hierdurch wird der biologische Reinigungseffekt weiter optimiert.

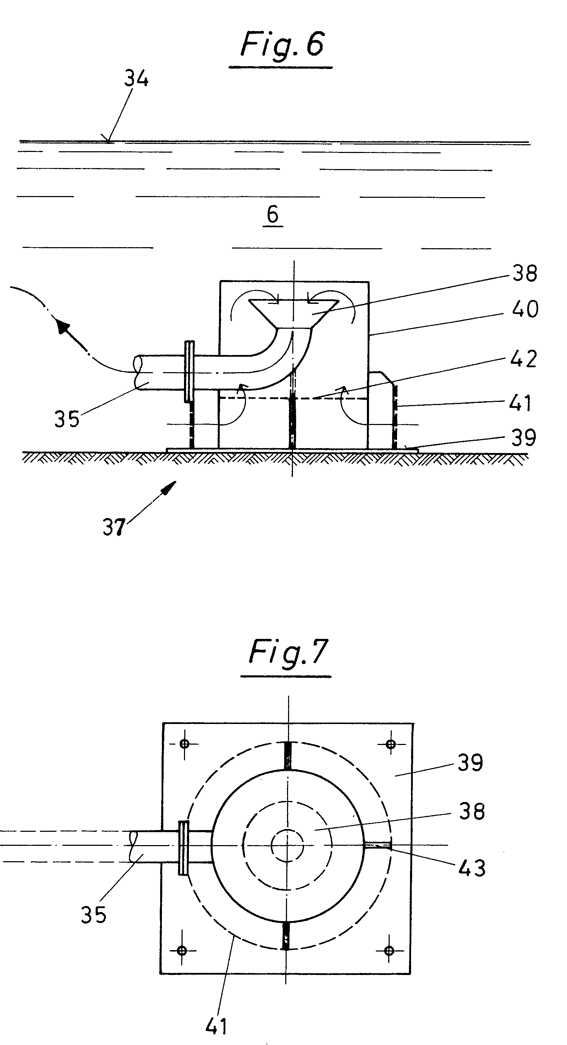

Das Ansaugende 36 ist über eine Schlauchleitung 35 mit einer Saugstation 5 verbunden. Die in Fig. 6 und 7 mit dem Bezugszeichen 37 bezeichnete Saugstation stimmt grundsätzlich mit der in Fig. 1 gezeigten Saugstation 5 überein. Sie besteht aus einem kastenförmigen Gehäuse 40, in dem der mit der Schlauchleitung 35 verbundene Einlauftrichter 38 so angeordnet ist, daß seine Öffnung in Richtung Wasseroberfläche 34 zeigt, Das über die Plattform 39 auf dem Boden des Gewässers 6 aufsitzende Gehäuse 40 ist rundum im Bereich des Einlauftrichters 38 geschlossen, so daß das angesaugte Wasser gezwungen ist, über die Plattform 39 zunächst durch das Grobsieb 41 und dann durch das Feinsieb 42 in das kastenförmige Gehäuse 40 einzuströmen. Das Großsieb 41 ist dabei über Stützen 43 in gewisser Entfernung zum kastenförmigen Gehäuse 40 gehalten. Insgesamt zeigt die Darstellung gemäß den Fig. 6 und 7, daß mit Hilfe der Saugstation 5, 37 eine relativ gleichmäßige Wasserströmung gewährleistet ist, so daß wenig Schmutzstoffe in den Bereich der Grobsiebe 41 bzw. Feinsiebe 42 gelangen.

**Patentansprüche**

1. Einrichtung zur Reinigung von Brauchwässern, insbesondere zur Regenerierung von verschlammten Gewässern mit Hilfe einer Wasserstrahlpumpe, die über ein Luftansaugrohr angesaugte Luft mit dem Wasser in eine doppelwandige, mit Steigung zur Wasseroberfläche in (Strömungsrichtung gesehen) angeordnete beidseitig offene Leitung ausstößt, wobei die innere Wandung der Leitung luftdurchlässig und deren äußere Wandung luftundurchlässig ausgebildet ist, dadurch gekennzeichnet, daß die Wasserstrahlpumpe (3) und die doppelwandige Leitung (4) einem Traggerüst (2) aus Rohrrahmen (7, 8) zugeordnet sind, die Entlüftungs- (12) und Flutventile (13) aufweisen.

2. Einrichtung nach Anspruch 1, dadurch gekennzeichnet, daß die Querrohre (9) aufweisenden Rohrrahmen (7, 8) miteinander durch Vertikalrohre (10) verbunden sind.

3. Einrichtung nach Anspruch 1 und Anspruch 2, dadurch gekennzeichnet, daß der obere und der untere Rohrrahmen (7, 8) in mehrere korrespondierende Abschnitte (15, 16) abgeschottet sind.

4. Einrichtung nach Anspruch 3, dadurch gekennzeichnet, daß die Abschnitte (15, 16) jeweils Entlüftungs- (12) und Flutventile (13) aufweisen.

5. Einrichtung nach Anspruch 1 bis Anspruch 3, dadurch gekennzeichnet, daß die Entlüftungsventile (12) dem oberen (7) und die Flutventile (13) dem unteren Rohrrahmen (8) zugeordnet sind.

6. Einrichtung nach Anspruch 1 und Anspruch 2, dadurch gekennzeichnet, daß der obere Rohrrahmen (7) im Bereich der Wasserstrahlpumpe (3) mehrere, einen dem Durchmesser der Rohre des Rohrrahmens entsprechenden Durchmesser aufweisende Querrohre (9') aufweist.

7. Einrichtung nach Anspruch 1, dadurch gekennzeichnet, daß die die Wasserstrahlpumpe (3) bildenden Verdichter (22), Pumpe (20) und Motor (21) axial hintereinander angeordnet sind.

8. Einrichtung nach Anspruch 1, dadurch gekennzeichnet, daß auf das freie Ende (25) des Luftansaugrohres (23) ein Schalldämpfer (24) aufgesetzt ist.

9. Einrichtung nach Anspruch 1 und Anspruch 3, dadurch gekennzeichnet, daß der obere Rohrrahmen (7) im Bereich der Verbindungsstellen (14) zwischen den Abschnitten (15, 16) Ständerfüße (17) für einen Gitterrost (18) aufweist.

10. Einrichtung nach Anspruch 1, dadurch gekennzeichnet, daß das Ansaugende (36) der Wasserstrahlpumpe (3) über eine Schlauchleitung (35) mit einer auf dem Boden des Gewässers (6) angeordneten Saugstation (37) verbunden ist.

11. Einrichtung nach Anspruch 10, dadurch gekennzeichnet, daß die Saugstation (37) einen zur Wasseroberfläche (34) weisenden Einlauftrichter (38) aufweist, der in einem mit vertikal angeordneten Grob- (41) und dahinter horizontal angeordneten Feinsieb (42) ausgerüsteten kastenförmigen Gehäuse (40) angeordnet ist.

12. Einrichtung nach Anspruch 1 und einem oder der nachfolgenden Ansprüche, dadurch gekennzeichnet, daß in dem zu reinigenden Gewässer (6) mehrere in Traggerüsten (2) aus Rohrrahmen (7, 8) angeordnete Wasserstrahlpumpen (3) und doppelwandige Leitungen (4) so angeordnet sind, daß diese über Ansaugung und Ausstoß des Wassers miteinander in Verbindung sind und gegebenenfalls ein Wasserkreislauf im Gewässer erzeugt und aufrechterhalten wird.

13. Einrichtung nach Anspruch 1, dadurch gekennzeichnet, daß das vordere Stück (29) des als Strömungskanal dienenden Leitungsinnenteils (28) vertikal verschwenkbar ausgebildet ist.

14. Einrichtung nach Anspruch 1, dadurch gekennzeichnet, daß der obere Rohrrahmen (7) endseitig jeweils Verankerungsösen (27) aufweist.

15. Einrichtung nach Anspruch 1, dadurch gekennzeichnet, daß die Spitze (33) des als Abdeckhaube dienenden Leitungsaußenteils (32) in vertikaler Richtung schwenkbar ausgebildet ist.

**Claims**

1. Apparatus for the purification of process water, in particular for the regeneration of muddy water, by means of a water jet pump discharging the air drawn in via an air intake pipe together with the water into a double-walled conduit, which is open on both sides and inclined to the water surface seen from the flow direction, the inner wall of the conduit being permeable to air and the ourter wall being impermeable to air, characterized in that the water jet pump (3) and the double-walled conduit (4) are allocated to a support rack (2) made of tubular frames (7, 8) provided with air relief (12) and air inlet (13) valves.

2. Apparatus according to claim 1 characterized in that the tubular frames (7, 8) provided with cross tubes (9) are connected with each other by vertical tubes (10).

3. Apparatus according to claims 1 and 2 characterized in that the upper and the lower tubular frames (7, 8) are screened into several corresponding sections (15, 16).

4. Apparatus according to claim 3 characterized in that each section (15, 16) is provided with air relief (12) and air inlet (13) valves.

5. Apparatus according to claims 1 to 3 characterized in that the air relief valves (12) are allocated to the upper tubular frame (7) and the air inlet valves (13) to the lower tubular frame (8).

6. Apparatus according to claims 1 and 2 characterized in that, in the area of the water jet pump (3), the upper tubular frame (7) is provided with several cross tubes (9') having a diameter which corresponds with the diameter of the tubes of the tubular frame.

7. Apparatus according to claim 1 characterized in that the compressor (22), the pump (20) and the motor (21), which make up the water jet pump (3), are axially arranged in line.

8. Apparatus according to claim 1 characterized in that a silencer (24) is mounted at the free end (25) of the air intake pipe (23).

9. Apparatus according to claims 1 and 3 characterized in that the upper tubular frame (7) is provided with pedestals (17) for a grate (18) in the area of the connecting points (14) between the sections (15, 16).

10. Apparatus according to claim 1 characterized in that the intake end (26) of the water jet pump (3) is connected, via a hose conduit (35), with a suction station (37) situated at the bottom of the water body (6).

11. Apparatus according to claim 10 characterized in that the suction station (37) is provided with an inlet hopper (38) pointing to the water surface (34), the hopper being situated in a box-like casing (40) equipped with a vertical coarse screen (43) followed by a horizontal fine screen (42).

12. Apparatus according to claim 1 and any of the following claims characterized in that several water jet pumps (3) and double-walled conduits (4) mounted in support racks (2) made of tabular frames (7, 8) are arranged in the water body (6) to be purified in such a way that the conduits are connected with each other via the water intake and discharge systems and that a water circulation in the water body may be produced and maintained.

13. Apparatus according to claim 1 characterized in that the front piece (29) of the inner part of the conduit (28) serving as a flow channel is designed as a vertically tiltable unit.

14. Apparatus according to claim 1 characterized in that the upper tubular frame (7) is provided with anchoring eyelets (27) at both ends.

15. Apparatus according to claim 1 characterized in that the tip (33) of the outer part of the conduit (32) serving as a covering hood can be vertically tilted.

## Revendications

1. Installation d'épuration d'eau industrielle, notamment pour régénerer des eaux s'étant envasées, au moyen d'une pompe à air par jet d'eau qui refoule de l'air aspiré par l'intermédiaire d'un tuyau d'aspiration d'air avec l'eau dans une conduite à double paroi ouverte aux deux extrémités et montant vers la surface d'eau vu dans le sens d'écoulement, la paroi intérieure de la conduite étant perméable à l'air et la paroi extérieure étant imperméable à l'air caractérisé par ce que la pompe à air par jet d'eau (3) et la conduite + double paroi (4) sont rattachées à une charpente de support (2) constituée de châssis tubulaires (7, 8) présentant des soupapes de dégagement d'air (12) et des soupapes de navire (13).

2. Installation suivant la revendication 1, caractérisé par ce que les châssis tubulaires (7, 8) comprenant des tubes transversaux (9) sont reliés par des tubes verticaux (10).

3. Installation suivant les revendications 1 et 2 caractérisé par ce que les châssis tubulaires supérieur et inférieur (7, 8) sont subdivisés en plusieurs sections étanches correspondentes (15, 16).

4. Installation suivant la revendication 3 caractérisé par ce que les sections (15, 16) comprennent chacune des soupapes de dégagement d'air (12) et des soupapes de navire (13).

5. Installation suivant les revendications 1 à 3, caractérisé par ce que les soupapes de dégagement d'air (13) sont rattachées au châssis tubulaire supérieur (7) et que les soupapes de navire sont rattachées au châssis tubulaire inférieur (8).

6. Installation suivant les revendications 1 et 2, caractérisé par ce que le châssis tubulaire (7) comprend au niveau de la pompe à air par jet d'eau (3) plusieurs tubes transversaux (9') dont les diamètres correspondent au diamètre des tubes du châssis tubulaire.

7. Installation suivant la revendication 1, caractérisé par ce que les compresseur (22), pompe (20) et moteur (21) constituant la pompe à air par jet d'eau sont agencés dans la même ace l'un derrière l'autre.

8. Installation suivant la revendication 1, caractérisé par ce que l'extrémité libre (25) du tuyau d'aspiration d'eau (23) est munie d'un silencieux (24).

9. Installation suivant la revendication 1 et la revendication 3, caractérisé par ce que le châssis tubulaire supérieur (7) comporte au niveau des raccordements (14) entre les sections (15, 16) des supports (17) destinées à reçevoir une grille (18).

10. Installation suivant la revendication 1, caractérisé par ce que l'extrémité d'aspiration (36) de la pompe à air par jet d'eau (3) est solidaire d'une station d'aspiration (37) disposée sur le fond de l'eau (6).

11. Installation suivant la revendication 19, caractérisé par ce que la station d'aspiration (37) comporte un entonnoir de charge (34) dirigé vers la surface d'eau placé dans un carter en forme de caisse (40) comprenant un tamis gros (41) disposé verticalement et un tamis fin (42) disposé horizontalement en aval de ce dernier.

12. Installation suivant la revendication 1 et l'un ou les revendications qui suivent, caractérisé par ce que dans l'eau à épurer (6) plusieurs pompes à air par jet d'eau (3) et conduites à double paroi disposées dans des charpentes de support (2) constituées de châssis tubulaires (7, 8) sont agencées de manière à être en communication par l'intermédiaire de l'aspiration et de l'éjection de l'eau et à produire et à maintenir le cas échéant une circulation d'eau dans l'eau.

13. Installation suivant la revendication 1, caractérisé par ce que la pièce avant (29) de la partie intérieure de la conduite (28) servant de canal d'écoulement est constituée de manière à être pivotée verticalement.

14. Installation suivant la revendication 1, caractérisé par ce que le châssis tubulaire supérieur (7) comprend à chaque extrémité des oeuillets d'ancrage.

15. Installation suivant la revendication 1, caractérisé par ce que la pointe (33) de la partie extérieure (32) de la conduite servant de capot est constituée de manière à être pivoté verticalement.

## Fig.1

0 044 382

Fig.2

# Fig.3

## Fig.4

## Fig.5

## Fig.6

## Fig.7

17